# EUROPÄISCHE PATENTSCHRIFT

(11) **EP 3 448 649 B1**
(45) Veröffentlichungstag und Bekanntmachung des Hinweises auf die Patenterteilung: **02.03.2022**
(21) Anmeldenummer: 17720442.7
(22) Anmeldetag: 25.04.2017
(51) Int. Cl.: B29C 45/00, C08J 5/04, B65D 85/804, C08L 99/00, B29B 7/00, B29K 511/00, B29K 67/00, B29B 7/46, B29B 7/40, B29B 7/90, A01G 9/02, B65D 65/46

(54) **VERFAHREN ZUR HERSTELLUNG EINES HOMEKOMPOSTIERBAREN BIO-KUNSTSTOFFPRODUKTS, VERWENDUNG EINES SONNENBLUMENKERNSCHALEN-BIOKOMPOSITS UND BEHÄLTER, VERPACKUNG, FOLIE, HOMEKOMPOSTIERBARES SPRITZGUSSPRODUKT UND DERGLEICHEN, DURCH DAS GENANNTE VERFAHREN HERGESTELLT.**
PROCESS FOR MANUFACTURING A HOME COMPOSTABLE BIO-PLASTIC PRODUCT, USE OF A SUNFLOWER SEED SHELL AND CONTAINER, PACKAGING, FILM, HOME COMPOSTABLE INJECTION MOLDED PRODUCT AND THE LIKE, MANUFACTURED WITH SAID METHOD.
PROCÉDÉ DE FABRICATION D'UN PRODUIT EN BIOPLASTIQUE COMPOSTABLE À DOMICILE, UTILISATION D'UNE COQUE DE GRAINES DE TOURNESOL, ET RÉCIPIENT, EMBALLAGE, FILM, PRODUIT COMPOSTABLE À DOMICILE MOULÉ PAR INJECTION ET PRODUIT SIMILAIRE, FABRIQUÉ PAR LEDIT PROCÉDÉ.

(30) Priorität: 25.04.2016 DE 102016107654
(43) Veröffentlichungstag der Anmeldung: 06.03.2019
(73) Patentinhaber: SPC Sunflower Plastic Compound GmbH, 49681 Garrel (DE)
(72) Erfinder: MEYER, Sebastian, 58675 Hemer (DE); MEYER, Ulrich, 49681 Garrel (DE); TRUMME, Reinhard, 49413 Dinklage (DE); SIMEONE, Christina, 48565 Steinfurt (DE); ALBERS, Stephan, 49413 Dinklage (DE)
(74) Vertreter: Eisenführ Speiser
(86) Internationale Anmeldenummer: PCT/EP2017/059835
(87) Internationale Veröffentlichungsnummer: WO 2017/186743

(56) Entgegenhaltungen:
- WO-A1-2013/072146
- WO-A1-2014/184273
- FR-A1- 2 940 297
- US-A1- 2012 097 602
- Anonymous: "PHA: promising, versatile, biodegradable | Bio Based Press", , 31 December 2016 (2016-12-31), XP055695880, Retrieved from the Internet: URL:https://www.biobasedpress.eu/2016/08/p ha-promising-versatile-biodegradable/ [retrieved on 2020-05-15]
- Anonymous: "Trends in Packaging of Food, Beverages and Other Fast-Moving Consumer Goods ... - Google Books", , 31 December 2013 (2013-12-31), page 124, XP055695885, Retrieved from the Internet: URL:https://books.google.nl/books?id=2f9DA gAAQBAJ&pg=PA124&lpg=PA124&dq=pha+home+com postable&source=bl&ots=psjAeimm6x&sig=ACfU 3U0r2qHYzCKUMCIezwpiD45XEy75wg&hl=en&sa=X& ved=2ahUKEwjTg8a6zLXpAhXR4KQKHVymBqQQ6AEwE HoECAsQAQ#v=onepage&q=pha%20home%20compost able&f=false [retrieved on 2020-05-15]

## Beschreibung

Biologisch abbaubare Werkstoffe sind schon länger bekannt und auch sind bekannt biologisch abbaubare Kunststoffe. Hierzu zählt unter anderem auch das Polybutylensuccinat, kurz PBS, ein biologisch abbaubarer Biokunststoff, der aus Butandiol (z.B. Bio-BDO) und Bernsteinsäure, die auch biobasiert darstellbar ist, hergestellt wird.

Zur gleichen Klasse der biologisch abbaubaren Kunststoffe gehört auch Polybutylensuccinat-Adipat (PBSA), welchem neben der Bernsteinsäure noch Adipinsäure einpolymerisiert wird. Auch dieser Kunststoff kann je nach Monomer-Herkunft mehr oder weniger biobasiert sein.

Aus DE 10 2007017321 ist eine Mehrschichtfolie und ein Verfahren zu ihrer Herstellung bekannt und in einer der in dieser Anmeldung offenbarten Varianten kommt auch ein thermoplastisches Polyester wie z.B. PBS zum Einsatz, welches allein oder in Kombination mit anderen thermoplastischen Polyestern eingesetzt wird.

Die bisher bekannten biologisch abbaubaren Kunststoffe - dies gilt auch für PLA (Polyactidsäure) - sind zwar bekannt, aber nach wie vor noch relativ teuer in ihrer Herstellung und auch bei ihrer Verarbeitung, nämlich insbesondere zum Spritzgießen eines Endprodukts bedarf es einer relativ langen Maschinenzykluszeit.

Aus DE 10 2013 216 309 A1, DE 10 2013 208 876 A1, WO 2013/072146 A1 ist ein Biokomposit, bzw. Biowerkstoff mit Sonnenblumenkernschalen/-Hülsen bekannt, wobei als Kunststoffkomponente ein PLA eingesetzt wird. Ferner wird als Stand der Technik hingewiesen auf WO 2014/184273 A, FR 2 940 297 A1 sowie US 2012/0097602 A1.

Auch sind die Maßnahmen, um bestimmte physikalische Eigenschaften, z.B. Sprödigkeit, Elastizität, E-Modul, Festigkeit etc., bei solchen biologisch abbaubaren Kunststoffen einzustellen, relativ aufwändig und teuer.

Der Erfindung liegt die Aufgabe zugrunde, die bisherigen Nachteile zu verringern oder gar gänzlich zu vermeiden.

Die vorliegende Erfindung betrifft ein Verfahren zum Herstellen eines Bio-Werkstoffprodukts auf Basis von Sonnenblumenkernschalen bzw. Sonnenblumenkernhülsen nach Anspruch 1 sowie eine Verwendung eines Sonnenblumenkernschalen-Biokomposits nämlich SPC PBS oder SPC PBSA zur Herstellung von biologisch abbaubaren, homekompostierbaren Verpackungen gemäss Anspruch 3. Die Erfindung betrifft ferner die nach dem erfindungsgemässen Verfahren erhaltenen Behälter, Verpackung, Folie usw. gemäß Anspruch 5 und das nach dem erfindungsgemässen Verfahren erhaltene homekompostierbare Spritzgussprodukt gemäss Anspruch 6. Vorteilhafte Weiterbildungen sind in den Unteransprüchen beschrieben.

Bei der Erfindung wird das an sich bekannte Polybutylensuccinat (PBS), Polybutylensuccinat-Adipat (PBSA) zusammen mit Sonnenblumenschalenfasern (diese können auch Sonnenblumenkernhülsenfasern sein) compoundiert (nachfolgend auch als SPC PBS oder SPC PBSA bezeichnet).

Da die Sonnenblumenschalenfasern ein reines Bioprodukt sind, denn die Sonnenblumenschalen umgeben den ölhaltigen Kern einer Sonnenblumensaat, bedarf es zur Aufbereitung der Sonnenblumenschalenfasern lediglich des Schälens der Saat, der Zerkleinerung (z.B. durch einen Mahlprozess) des Schalenmaterials auf die gewünschte Korngröße, sowie der Trocknung auf einen bestimmten Feuchtigkeitswert und der Entölung (Reduzierung) auf einen gewünschten Öl-/Fettgehalt.

Die Zerkleinerung der Sonnenblumenschalenfaser erfolgt durch einen Mahlprozess, wobei die Korngröße im Bereich von 3 Millimetern oder weniger liegt, vorzugsweise im Bereich von 0,01mm bis 1mm, besonders bevorzugt im Bereich von 0,1mm bis 0,3mm.

Die vorgenannten Korngrößenangaben bedeuten, dass wenigstens ein gewünschter Prozentsatz, z.B. 80 Prozent oder mehr, des Fasermaterials die angegebene Korngröße aufweist und lediglich geringe Anteile außerhalb des gewünschten Korngrößenbereichs liegen.

Durch die Compoundierung des Sonnenblumenschalenmaterials mit dem PBS-Material in einem Extruder, z.B. einem Doppelschneckenextruder, entsteht ein Compound, welches spritzgussfähig ist und welches ein Elastizitätsmodul und/oder eine Zugfestigkeit im End-Biowerkstoffprodukt aufweist, welches gegenüber einem Biowerkstoffprodukt aus reinem PBS deutlich erhöht ist und weitere bessere Eigenschaften aufweist.

Ein besonderer Einsatzbereich der Erfindung liegt in der Herstellung von biologisch abbaubaren Verpackungen bzw. Behältern wie z.B. Kaffeekapseln, Blumentöpfen, Taschen, Boxen etc.

Vor allem können durch die Erfindung die Herstellkosten gegenüber der Verwendung von reinem PBS deutlich reduziert werden, z.B. über 10 Prozent. Das liegt daran, dass die Sonnenblumenschalenfaser und ihre Aufbereitung deutlich günstiger ist als die Herstellung des PBS-Materials. Da die Sonnenblumenschalenfaser bis zu einer Temperatur von 200 Grad Celsius auch thermisch stabil ist, erfolgt keine negative sensorische Beeinflussung eines Kaffeeprodukts, wenn dieses in einer erfindungsgemäßen Kaffeekapsel unter relativ hohem Druck und/oder hoher Temperatur in einer entsprechend dafür geeigneten Kaffeemaschine hergestellt wird.

Dadurch dass die Sonnenblumenschalenfaser quasi eine "Biofaserverstärkung" für den Kunststoff bereitstellt, können u.U. auch die Wanddicken der Kapsel gegenüber reinem PBS-Material verringert werden, was den Mengeneinsatz von PBS pro Behälter, Verpackung, Kaffeekapsel etc. verringert und nochmals zu einer Kosteneinsparung führt.

Die Erfindung ist nachfolgend anhand eines Ausführungsbeispiels erläutert.

Die Ausführungsbeispiele beziehen sich auf eine biologisch abbaubare Kaffeekapsel bzw. auf einen biologisch abbaubaren und somit kompostierbaren Pflanzenbehälter (Blumentopf), ist aber auf jedwede biologisch abbaubare und somit kompostierbare Verpackung, Behälter oder dergleichen ausdehnbar.

Die Figuren zeigen:

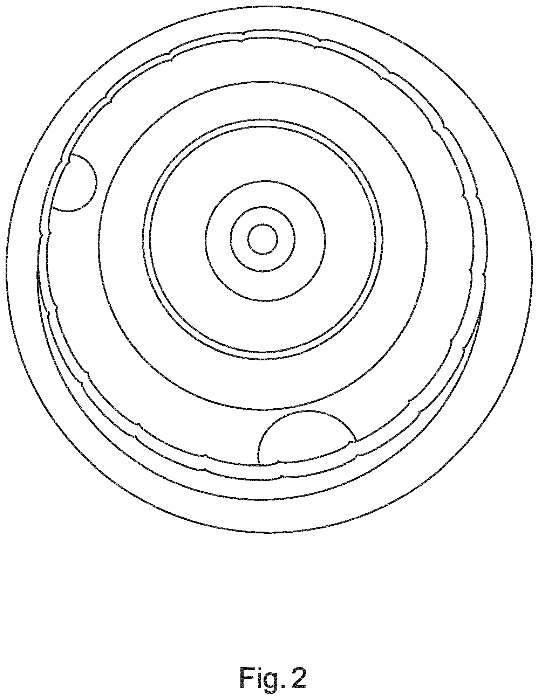

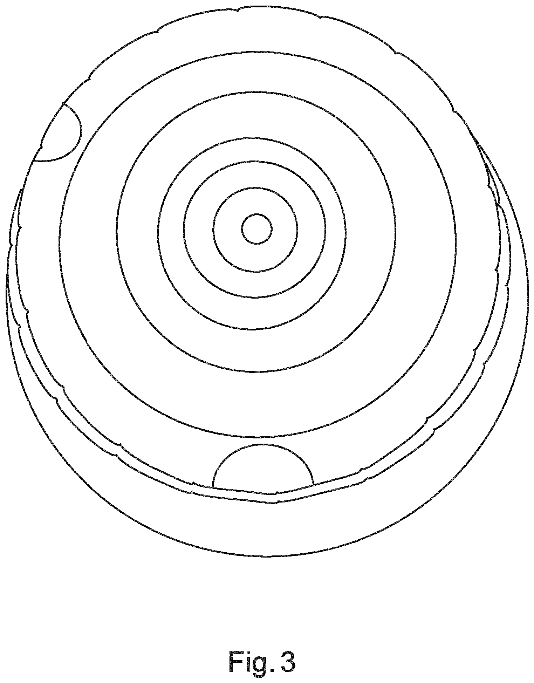

- Fig. 1 bis 4: verschiedene Ansichten einer erfindungsgemäßen Kaffeekapsel vom Nespresso-Typ.

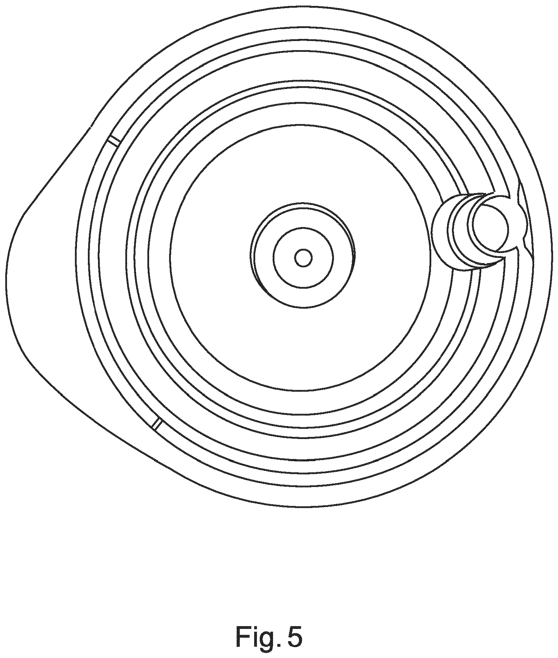

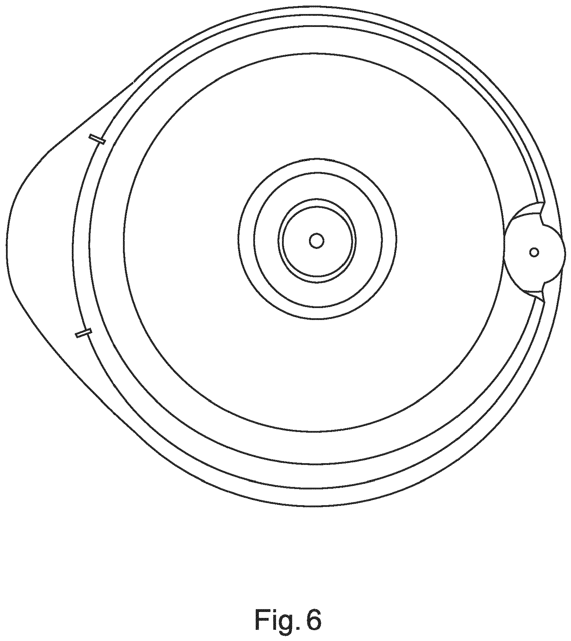

- Fig. 5 und 6: verschiedene Ansichten einer erfindungsgemäßen Kaffeekapsel vom Tassimo-Typ.

Für die Kaffeekapsel vom Tassimo-Typ wurde eine Materialrezeptur gemäß Tabelle 1 verwendet, für die Kaffeekapsel vom Nespresso-Typ eine Materialzusammensetzung gemäß Tabelle 2.

Aus beiden Tabellen ist zu ersehen, dass 69 Prozent des Kaffeekapselmaterials durch ein Bio-PBS FZ71PM (dessen Datenblatt ist ebenfalls beigefügt) und 30 Prozent des Compoundiermaterials durch Schalenmehl (Korngröße < 0,5 bzw. 0,2 mm) gebildet wurde und ferner einer Additiv (Haftvermittler), nämlich Licocene PP MA 7452 eingesetzt wurde.

Die Angaben über das eingesetzte Bio-PBS FZ71PM finden sich in dem technischen Datenblatt am Ende der vorliegenden Beschreibung.

Weitere Materialangaben, insbesondere physikalische Parameter über das erfindungsgemäße Material S²PC 3071 MI (für die Kaffeekapsel vom Tassimo-Typ) bzw. S²PC 3071 MIF (für die Kaffeekapsel vom Nespresso-Typ) finden sich in den ebenfalls beigefügten Materialdatenblättern.

Hierbei stechen insbesondere einige Werte hervor, z.B. der Wert für das E-Modul, Zugfestigkeit, etc..

Das E-Modul für reines PBS liegt nach bisher bekannten Angaben im Bereich von 300 und 700MPa, während hingegen das E-Modul für den erfindungsgemäßen Biowerkstoff SPC PBS/PBSA - siehe die entsprechenden Materialdatenblätter in Tabelle 3 und 4 - über 1200MPa liegt, bei S²PC 3071 MIF bei ca. 1300MPa, bei S²PC 3071 MI sogar bei 1468MPa (SPC = Sunflower Plastic Compound).

Durch das bessere E-Modul lässt sich das Material besser mit Dornen oder Wasserdruck durchstoßen. Die durch die Dornen oder Wasserdruck gebildeten Löcher im Material sind für Kaffeekapseln wichtig und (für konventionelle Kapseln) bekannt.

Durch die Erhöhung des Sonnenblumenschalenfaseranteils im Compound kann das E-Modul sogar noch gesteigert werden.

Bei den ebenfalls hier in der Anmeldung und in der Erfindung beanspruchten Pflanzentöpfen liegt die Anforderung an das E-Modul derzeit bei mindestens 1150MPa, was durch ein reines PBS-Material nicht geleistet werden kann.

Selbstverständlich liegt es auch im Rahmen der Erfindung, wenn der Anteil des Sonnenblumenschalenmehls einerseits und des PBS andererseits variiert wird. Die in dieser Anmeldung in den Tabellen angegebenen Verhältnisse von PBS (69%) zu Schalenmehl (30%) sind nur beispielhaft zu verstehen und Abweichungen davon (+/- 1-25%) sind jederzeit möglich und liegen im Bereich der Erfindung.

Auch kann der Mengenanteil (Gewichtsprozente) des Haftvermittler, also des Additivs Licocene PP MA 7452 verändert werden, ohne dass die aus der Erfindung herausführt und es können auch andere, vergleichbare Haftvermittler eingesetzt werden.

Die besondere Eigenschaft des erfindungsgemäßen Biowerkstoffs, gebildet aus Sonnenblumenschalenmehl einerseits und PBS andererseits, besteht darin, dass dieses vollständig biologisch abbaubar, also kompostierbar, ist. Das bedeutet konkret, dass eine "Home-Kompostierbarkeit" vorliegt, denn das so hergestellte Material kann durch eine entsprechende biologische Umgebung (Kompost oder Boden/Erde) vollständig abgebaut werden.

Auch hat das erfindungsgemäße Material den Vorteil, dass die Zykluszeit bei der im Spritzgussprozess, also dann, wenn das erfindungsgemäße Compound in einer Spritzgussanlage verwendet wird, um ein entsprechendes Endprodukt, z. B. also eine Kaffeekapsel oder ein Pflanzentopf oder dergleichen, herzustellen, kann die Zeit, in der das Material in der Spritzgussanlage eingespritzt und dann entnommen wird, deutlich, d. h. um bis zu 5 bis 10 % oder darüber hinaus, verkürzt werden, was die Leistungsfähigkeit des gesamten Spritzgussprozesses auf einer bestehenden Produktionseinrichtung deutlich erhöht und somit auch wiederum eine Kostenreduktion zur Folge hat.

Für die "Home-Kompostierbarkeit" und optimale Abbaubarkeit im Boden des gesamten extrodierten Endproduktes liefert die Erfindung auch das Sonnenblumenschalenmehl als natürliches Humusmaterial mit, sodass insgesamt auch der biologische Abbauprozess schneller als bisher erfolgt, denn die die Kompostierung bedingenden Bakterien und Mikroorganismen können damit das gesamte Material leichter aufschließen, indem sie sich zunächst vor allem auf den Sonnenblumenschalenmehl ansiedeln können, um dann das restliche Material zu erschließen.

Auch wird mit dem erfindungsgemäßen Biowerkstoff eine deutlich höhere Wärmeformbeständigkeit ermöglicht, da diese bei 97 Grad Celsius gegenüber 95 Grad Celsius bei reinem PBS liegt. Das ist ein besonderer Vorteil, denn bei der benötigten Wassertemperatur bei den Kaffeekapseln von mindestens 90 Grad Celsius ist jedes Grad Celsius verbesserte Wärmeformbeständigkeit gewünscht, weil es insgesamt dazu beiträgt, dass die Kaffeekapsel auch im Kaffeeherstellungsprozess noch stabil genug ist und vor allem in keiner Weise zur geschmacklichen (negativen) Degradierung des Kaffeeprodukts beiträgt.

Soweit in der vorliegenden Anmeldung von Schalenmehl, also dem Mehl aus Sonnenblumenschalen/-hülsen, die Rede ist, so wird dieses von dem Sonnenblumenschalenmaterial durch einen entsprechenden Mahlprozess, z. B. einer Prallmühle hergestellt, mittels welcher das Schalenmaterial auf die gewünschte Korngröße bzw. Faserlänge, z. B. 0,5 mm, 0,2 mm, oder dergleichen, gebracht wird,

Der Ölanteil im Schalenmaterial des SPC PBS-Materials liegt dabei deutlich unter 10 Prozent, z. B. durch Entölung bei 6 Prozent oder weniger, und die Restfeuchtigkeit im Compoundmaterial liegt durch Trocknung bei unter 1 Prozent, vorzugsweise bei ca. 0,05 Prozent (oder weniger, aber auch 0,1% bis 0,5% ist noch akzeptabel).

Es liegt auch im Rahmen der Erfindung, wenn noch eine weitere biologisch abbaubare Kunststoffkomponente statt PBS und im Bedarfsfall auch eine weitere biologische Faser, wie z.B. Holzfaser, dem Sonnenblumenfaser-PBS-Compound hinzugefügt wird. Ein erster Test hat beispielsweise ergeben, dass dann, wenn eine Holzfaser, Hanf oder Flachsfaser ebenfalls auf die gleiche Größenordnung wie z. B. 0,1 - 0,5 mm Korngröße/Faserlänge reduziert wird und 5-10% des Gesamtprodukts ausmachen, die physikalischen, biologischen und chemischen Eigenschaften des erfindungsgemäßen SPC-PBS-Materials nicht drastisch verändern, jedenfalls nicht substantiell verschlechtern. Als weitere Forschung lassen sich unter Umständen noch weitere bevorzugte biologische Materialien finden, die optimal mit dem Sonnenblumenschalenmaterial und dem PBS/PBSA-Material compoundiert werden können, wobei dabei stets darauf zu achten ist, dass das zugenommene biologische Material im Compoundierungsprozess nicht an seine thermische Grenze kommt und unter Umständen dabei verbrennt/verkohlt, oder sich anderweitig zersetzt.

Wie erwähnt umfasst die Erfindung der vorliegenden Anmeldung auch die Herstellung einer Folie als Biowerkstoffprodukt auf Basis von Sonnenblumenkernschalen bzw. Sonnenblumenkernhülsen unter weiterer Verwendung von PBS, PBSA oder dergleichen.

Diese erfindungsgemäße Folie kann mit bekannten Folienherstellmaschinen (normalen Einschneckenextrudern) hergestellt werden. Die Dicke kann dabei zwischen ca. 200µm und 1000 µm betragen, wobei besonders bevorzugt wird eine Ausführung von ca. 300µm. Die erfindungsgemäße Folie zeichnet sich dadurch aus, dass sie mit 35% Sonnenblumenschalenmehl (das Schalenmehl weist dabei eine Faserlänge/Korngröße von < 200µm auf) und zusätzlich mit 30% eines mineralischen Füllstoffs, zum Beispiel, aber nicht ausschließlich, mit Kaolin gefüllt ist.

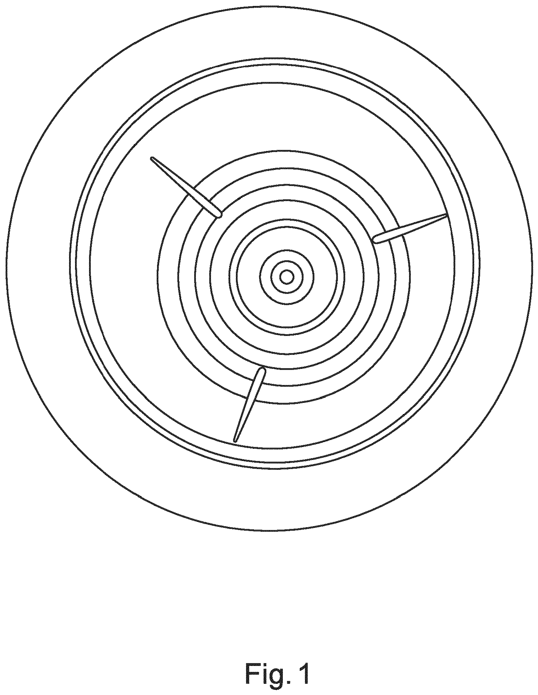

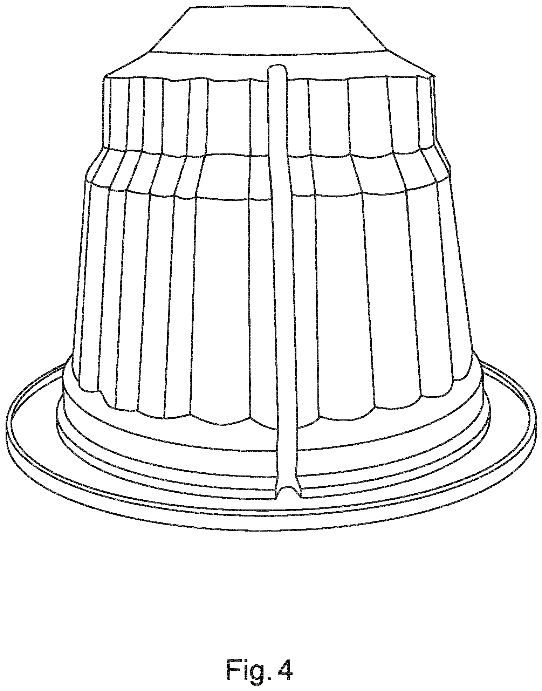

Diese Folie zeigt, wenn sie als z. B. 300 µm dicke Siegelfolie für Kaffeekapseln (zum Beispiel vom Typen Nespresso oder dergleichen) eingesetzt wird, ein besonders wünschenswertes Bruchverhalten auf. Mit dieser Folie kann gewährleistet werden, dass sie nur durch den Wasserdruck (an vorbestimmten, vorher eingravierten Stellen) der Kaffeemaschine in der Kapsel bricht. Dies ist mit einer konventionellen Kunststofffolie (z. B. aus PE, PVC, PP oder dergleichen) ohne Füllstoff nicht möglich, da diese in der Regel zu elastisch ist und dem Druck des Wassers damit standhalten kann. Regelmäßig ist die Siegelfolie, die bei Kaffeekapseln verwendet wird, dünner als der Wandbereich (ebenfalls aus Folie herzustellen, zum Beispiel durch Spritzgiessen oder Tiefziehprozess) der den unteren Teil der Kaffeekapsel (einschließlich Ausguss) als Aufnahmebehälter/Becher für das Kaffee/Tee-Material bildet (siehe Fig. 4 in der Seitenansicht, Fig. 1 in der Obenaufansicht) wobei eine Materialdicke von z. B. ca. 500 (oder weniger) µm für den Wandbereich völlig ausreichend ist, diese Materialdicke aber individuell eingestellt werden kann.

Aus diesen Gründen wird auch bei vielen Kaffeekapseln bislang als oberseitiger Verschluss eine dünne Alufolie verwendet (die vorgeprägt ist) und an vorbestimmten Stellen somit durch den Wasserdruck aufbrechbare Sollbruchstellen aufweist. Für solche zum Beispiel für den Nespressotyp kompatible Kapseln von Drittanbietern werden ebenfalls Alufolien eingesetzt. Eine solche Kaffeekapsel ist aber nicht kompostierbar, weil Aluminium kein Kompostverhalten bzw. Abbauverhalten im Boden aufweist, sondern im Gegenteil einen Kompost kontaminieren würde.

Werden solche Kapseln mit "bio" oder "kompostierbar" beworben, kommen auch verschiedene Papiere bzw. Papiersorten zum Einsatz. Nachteil dieser Papiere ist es aber, dass sie keine Barrierewirkung gegen Sauerstoff aufweisen und damit das Kaffeepulver in der Kapsel schnell an Qualität einbüßt. Daher zeichnet sich die erfindungsgemäße Kaffeekapsel, die oberseitig und/oder umfangsmäßig mit einer erfindungsgemäßen Folie ausgestattet ist, durch ihre sehr gute Sauerstoffbarrierewirkung aus. Diese Sauerstoffbarrierewirkung liegt bei < 50 cm³/m²*d*bar. Vorstehende Einheit bedeutet, dass weniger als 50 cm³ Sauerstoff pro Tag (d) bei einem bar Druck durch einen Quadratmeter vorhandenden (Folien-Materials) dringen.

Stellt man die Folie in einem Mehrschichtverbund her, in dem eine Zwischenlage von ca. 30 µm PVOH oder "G-Polymer" eingesetzt wird, kann die Folie eine Barrierewirkung von bis zu 0,4 cm³/m²*d*bar erreichen.

Man sieht sofort, dass somit die Barrierewirkung der erfindungsgemäßen Folien im Mehrschichtverbund mit einer PVOH-Zwischenlage drastisch verbessert wird.

Bei einem "G-Polymer" handelt es sich um ein modifiziertes PVOH-Material, welches besonders vorteilhaft für einen Mehrschichtverbund, bei dem das Folienmaterial aus dem erfindungsgemäßen Biowerkstoff gebildet wird, verwendet werden kann. Das G-Polymer stammt von der Firma Nippon Gohsei ist auch als "Nichigo-G-Polymer"-Amorphous Vinyl Alcohol Resin" bekannt und unter http://www.nippon-gohsei.com/nichigo-g-polymer beschrieben.

Die Herstellung von Mehrschichtfolien zur Verwendung in Kaffeekapseln ist bereits bekannt und solche Folien werden in einem Mehrschichtverfahren erzeugt. Solche Mehrschichtverfahren sind auch auf die erfindungsgemäße Folie unter Verwendung des S²PC-PBS-Materials anwendbar. Dazu stellt man die Kaffeekapsel in einem Koinjektionsverfahren (wie zum Beispiel bekannt aus WO 2016/071036 oder EP 1576 6515) her, bei dem die Barriereschicht aus PVOH oder G-Polymer besteht. Damit lassen sich ebenfalls sehr hohe Sauerstoffbarrierewerte erzielen. Dies stellt eine bevorzugte Ausführungsvariante der Erfindung dar, wenn dabei das erfindungsgemäße Compound, bestehend aus Sonnenblumenschalenmehl einerseits und damit SPC PBS bzw. PBSA verwendet wird.

In den Tabellen 5 und 6 wird ein Vergleich aufgezeigt, bei dem verschiedene, physikalische Parameter eines SPC-PLA-Materials einem erfindungsgemäßen SPC PBS-Material gegenübergestellt werden.

Diese Tabellen zeigen, dass ein SPC PLA (in der Tabelle jeweils links) zu einem sehr spröden Compound neigt, das gleichzeitig aber sehr steif ist, während die erfindungsgemäße SPC PBS-Variante (in der Tabelle mit S²PC 3092 MIFT13 bezeichnet) überraschenderweise ein deutlich weicheres (niedrigeres) E-Modul sowie eine niedrigere Zugfestigkeit aufweist und gleichzeitig eine höhere Schlagzähigkeit als SPC PLA aufweist.

Schließlich sei auch besonders darauf hingewiesen, dass ein SPC PLA-Material eine Wärmeformbeständigkeit von nur circa 55°Celsius aufweist und somit für die Anwendung in einer Kaffeekapsel nur eingeschränkt tauglich ist (das heiße Wasser wird regelmäßig mit einer Temperatur von ca. 90° ± 3°Celsius von der Kaffeemaschine durch die Kaffeekapsel gedrückt), während das erfindungsgemäße SPC-PBS-Material eine Wärmeformbeständigkeit von über 90°Celsius aufweist und somit deutlich besser geeignet ist und die Kaffeekapsel bei der Kaffeeproduktion stabil bleibt.

Gerade wegen der besonders hohen Wärmeformbeständigkeitstemperatur des erfindungsgemäßen SPC-PBS-Materials (die höher liegt als für reines PBS) lässt sich auch mit dem Material ein Behälter herstellen, der in der Lage ist, relativ hoch temperierte Flüssigkeiten/Nahrungsmittel, wie zum Beispiel Kaffee, Tee, Suppe, Nudeln, etc. aufzunehmen.

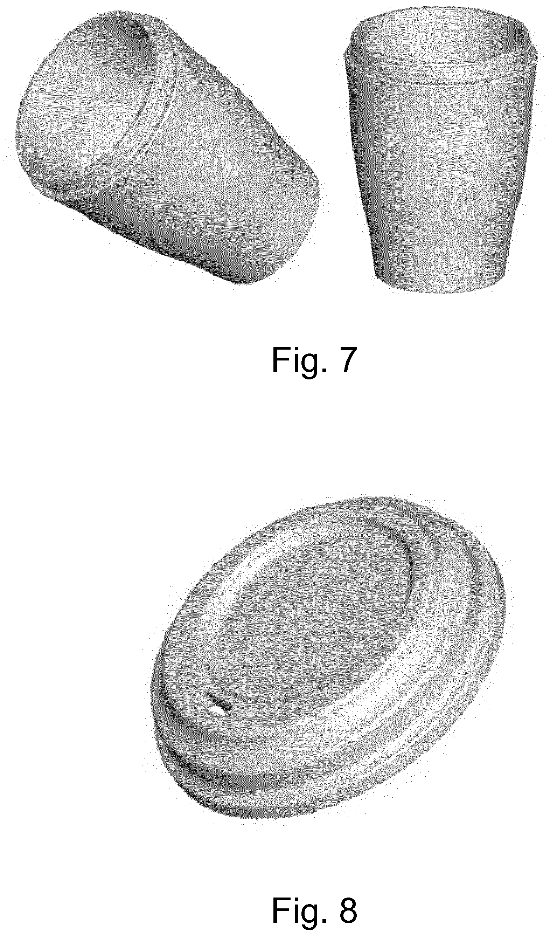

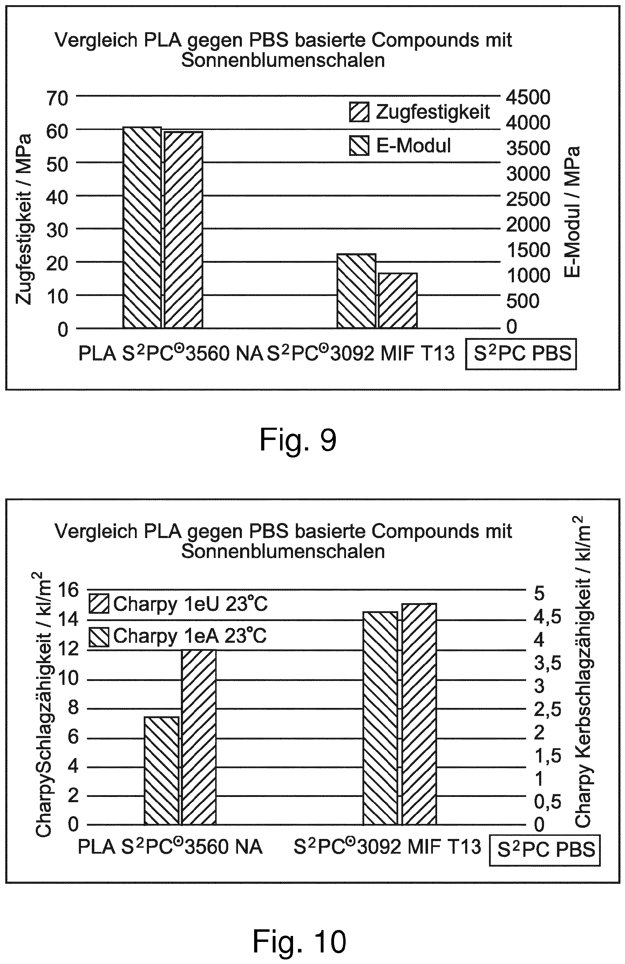

In den Figuren 7 und 8 ist ein entsprechender (Kaffee)Becher (Fig. 7) mit einem Becherbehälter (Fig. 8) gezeigt. Die Höhe des Bechers kann dabei zwischen 100 und 250 mm liegen, ein Durchmesser von 90 mm ist ohne Weiteres möglich und auch ein Volumen von 300 ccm oder mehr lässt sich problemlos erreichen und in einem Test wurde herausgefunden, dass der Becher trotz Befüllung mit heißem Kaffee oder Tee dabei sehr stabil bleibt, Dieser Becher ist auch mehrwegfähig, lässt sich nach Gebrauch sehr gut reinigen (ist auch spülmaschinenfest) und ist vor allem im Gegensatz zu bisherigen Kunststoffbechern "home-kompostierbar".

Es gibt zwar schon entsprechende Kunststoffbecher aus Biokunststoffen, die als kompostierbar beworben werden, allerdings gibt es dort keine Home-Kompostierbarkeit, sondern nur eine Industrie-Kompostierbarkeit, was bedeutet, dass die Becher in einem industriellen Prozess unter ganz bestimmten Bedingungen (und dem Zuschlag weiterer Zersetzungsstoffe) nur in einem industriellen Maßstab kompostiert werden können, nicht jedoch wie der erfindungsgemäße Behälter bzw. Becher, der sich auf einem Komposthaufen innerhalb kurzer Zeit rückstandsfrei in der Natur zersetzt wird und somit als home-kompostierbar gelten kann.

Soweit in der vorliegenden Anmeldung von einer Kaffeekapsel die Rede ist, ist damit gleichzeitig natürlich auch jede andere Anwendung unter Verwendung von Kapseln gemeint, wie zum Beispiel Teekapseln, Suppenkapseln etc..

Die hervorragenden biodegradierbaren, home-kompostierbaren Eigenschaften des erfindungsgemäßen S²PC-PBS-Materials lassen es auch zu, dieses Material für Urnen (Bestattungsurnen) einzusetzen. Dabei wird dann aus dem Compound-Material durch entsprechende Herstellverfahren, zum Beispiel Tiefziehen, Prägen, Spritzgießen, etc. die Urne gefertigt, in die dann die Asche abgefüllt werden kann. Erste Tests lassen vermuten, dass die komplette Auflösung des Materials im Erdboden (ca. 50 - 100 cm Tiefe) schon nach 5 Jahren vollständig erreicht ist (hervorragende Bodenabbaubarkeit des erfindungsgemäßen SPC PBS, bzw. SPC PBSA) und dabei keine Konterminationsrückstände im Boden hinterlässt.

Schließlich sei auch auf die bevorzugte Verwendung des SPC PBS-Materials im Forstschutz hingewiesen. Wenn junge Pflanzen in einem Einzelverband gepflanzt werden, muss dafür gesorgt werden, dass die Pflanzen vor dem Verbiss insbesondere gegen Rehwild und anderem Schalenwild geschützt werden. Dies geschieht bislang mit Drahtgittern oder Kunststoffumhausungen, die um die Jungpflanze angeordnet werden, damit diese möglichst störungsfrei ihrem Terminaltrieb nach oben entwickeln kann, ohne durch einen Wildverbiss Schaden zu nehmen. Das Problem der bisherigen Baumschutzmaßnahmen (es gibt auch viele Baumschutzkunststoffmaterialien wie z. B. auch Kunststoffbänder, die zu Spiralen um die Pflanzen gewickelt werden, auch Kunststoffgitter etc.) besteht darin, dass dieses Kunststoffmaterial in der freien Natur verbleibt, aber sich nicht zersetzt mit der Folge, dass es auch vom Wild im Spieltrieb aufgenommen wird und unter Umständen dadurch Teile dieses Kunststoffmaterials in den Magen-Darm-Trakt des Wildes gelangt und das Tier schädigt. Durch die Verwendung des erfindungsgemäßen SPC PBS/PBSA-Materials baut sich das gesamte Material innerhalb weniger Jahre komplett ab und kann auch nicht zu Schäden im Magen-Darm-Trakt von Wild führen.

Die Verwendung des erfindungsgemäßen Biowerkstoffprodukts aus SPC PBS, bestehend aus Sonnenblumenschalenmaterial einerseits und damit compoundiertem PBS-Material andererseits zur Herstellung von Baumspiralen, mechanischem Pflanzen- und Verbissschutz etc., hat also auch den Vorteil, dass das Material nach seiner Anbringung um die Pflanzen nicht notwendigerweise wieder aus dem bestehenden Wald herausgeholt werden muss, weil es sich innerhalb weniger Jahre durch den Kompostierungsprozess von selbst auflöst.

Soweit in der vorliegenden Anmeldung von einem mechanischen Wildverbissschutz die Rede ist, sind damit alle entsprechenden Produkte gemeint wie Baumspiralen, Baumschutzgitter, Wuchshüllen als Schutz für junge Bäume, Pflanzen, Weinstöcke und dergleichen.

**Tabelle 1**

| Bezeichnung | % | Menge | Einheit |
|---|---|---|---|
| Bio PBS FZ71PM | 69,00 | 690 | Kg |
| Schalenmehl LGM 3 (<0,5mm) | 30,00 | 300 | Kg |
| Licocene PP MA 7452 | 1,00 | 10 | Kg |

**Tabelle 2**

| Bezeichnung | % | Menge | Einheit |
|---|---|---|---|
| Bio PBS FZ71PM | 69,00 | 690 | Kg |
| Schalenmehl LGM 3 (<0,2mm) | 30,00 | 300 | Kg |
| Licocene PP MA 7452 | 1,00 | 10 | Kg |

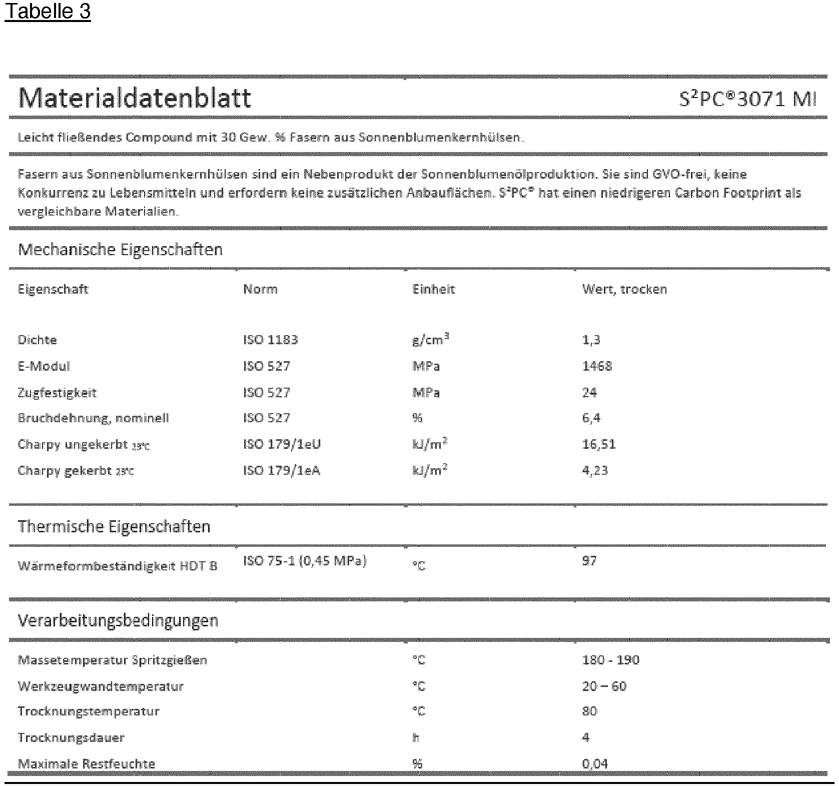

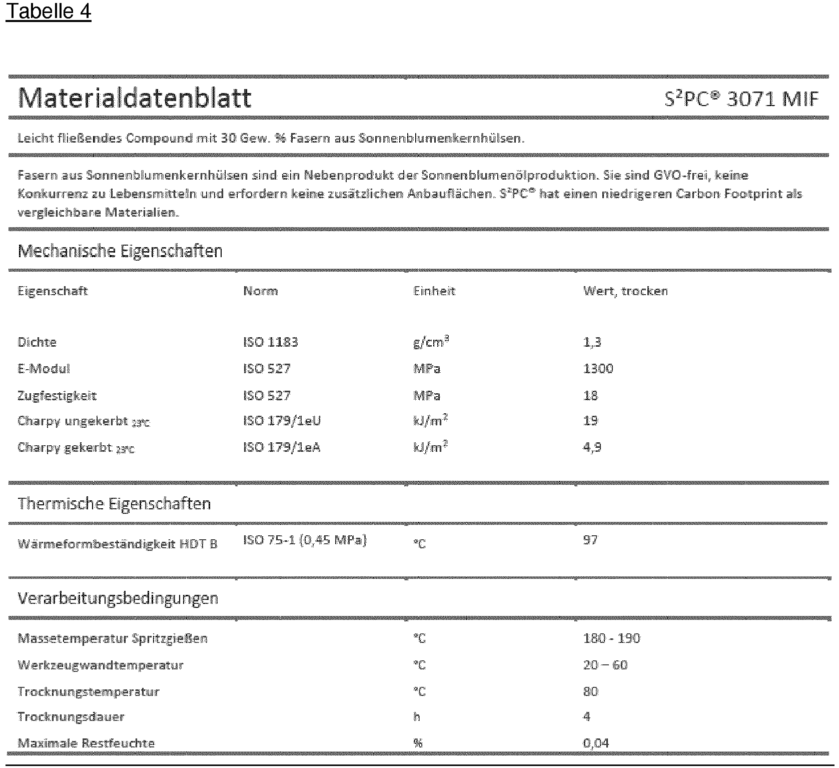

## Patentansprüche

1. Verfahren zum Herstellen eines homekompostierbaren Bio-Werkstoffprodukts auf Basis von Sonnenblumenkernschalen bzw. Sonnenblumenkernhülsen umfassend:
- Bereitstellen oder Herstellen eines compoundierten Materials, wobei das Material durch Compoundieren eines Sonnenblumenkernschalenmaterials bzw. Sonnenblumenkernhülsenmaterials SPC mit einem biologisch abbaubaren Kunststoff, nämlich Polybutylensuccinat (PBS) oder Polybutylensuccinat-Adipat (PBSA) erhalten wird, wobei das mit PBS compoundierte Sonnenblumenkernschalenmaterial bzw Sonnenblumenkernhülsenmaterial als SPC PBS bezeichnet wird und das mit PBSA compoundierte Sonnenblumenkernschalenmaterials bzw. Sonnenblumenkernhülsenmaterials als SPC PBSA bezeichnet wird.

2. Verfahren nach Anspruch 1, wobei das Verfahren den zusätzlichen Schritt umfasst:
- Verwenden des compoundierten Materials für die Herstellung eines Spritzgussproduktes aus der Liste von Spritzgussprodukten aufweisend: biologisch abbaubarer Behälter, Verpackung, Folie, insbesondere von Kaffeekapseln, Teekapsel, Urne, Becher, Pflanzentopf, Blumentopf, Baumspirale, mechanischer Pflanzen- und Verbissschutz.

3. Verwendung eines Sonnenblumenkernschalen-Biokomposits, nämlich SPC PBS oder SPC PBSA, zur Herstellung von biologisch abbaubaren, homekompostierbaren Verpackungen, Kaffeekapseln, Teekapseln, Behältern, Pflanzentöpfen, Urnen, Verbissschutz, Becher, Blumentöpfen, Folien, wobei das Biokomposit aus einem biologisch abbaubaren Kunststoff besteht, nämlich Polybutylensuccinat (PBS) oder Polybutylensuccinat-Adipat (PBSA), welches mit Sonnenblumenkernschalenmaterial bzw. Sonnenblumenkernhülsenmaterial compoundiert ist.

4. Verfahren nach Anspruch 2, **dadurch gekennzeichnet, dass** das compoundierte Material in einem Spritzgussverfahren zur Herstellung des Behälters, der Kaffeekapsel, der Teekapsel, der Verpackung, des Pflanztopfes, des Blumentopfes, der Folie, des Bechers verarbeitet wird.

5. Behälter, Verpackung, Folie, Kaffeekapsel, Teekapsel, Pflanztopf, Blumentopf, Becher, Urne, Baumspirale, mechanischer Pflanzen- und Verbissschutz, hergestellt durch ein Verfahren nach einem der vorhergehenden Ansprüche 1, 2 und 4 wobei das hergestellte Produkt, nämlich der Behälter, die Verpackung, die Folie, die Kaffeekapsel, die Teekapsel, der Pflanztopf, der Blumentopf, der Becher, die Urne, die Baumspirale, der mechanische Pflanzen- und Verbisschutz, biologisch abbaubar und homekompostierbar ist.

6. Homekompostierbares Spritzgussprodukt, hergestellt durch ein Verfahren nach Anspruch 1 oder 2 und hergestellt aus einem compoundierten Material, wobei das Material durch Compoundieren von Sonnenblumenkernschalenmaterial bzw. Sonnenblumenkernhülsenmaterial mit einem biologisch abbaubaren Kunststoff, nämlich Polybutylensuccinat (PBS) oder Polybutylensuccinat-Adipat (PBSA), erhalten wird und ein Anteil des Sonnenblumenkernschalenmaterials bzw. Sonnenblumenkernhülsenmaterials im Compound bei wenigstens 10 %, vorzugsweise bei 30 % oder mehr, beispielsweise auch über 50 % liegt.

7. Behälter, Verpackung, Folie, insbesondere Kaffeekapsel, Teekapsel, Pflanztopf, Blumentopf, Becher, Urne wie nach Anspruch 5, **dadurch gekennzeichnet, dass** das herzustellende Produkt, also Behälter, Verpackung, Folie usw. mit einem Mehrschichtverbund aufgebaut ist mit einer ersten und zweiten Schicht und einer zwischen den beiden Schichten angeordneten Zwischenlage, wobei die erste und die zweite Schicht aus SPC PBS und/oder SPC PBSA besteht und die Zwischenlage, z. B. aus PVOH des G-Polymer, als Barriereschicht als Sauerstoffbarriereschicht wirkt, deren Sauerstoffbarrierewirkung bei < 50 cm³/m²*d*bar liegt, vorzugsweise unter 10 cm³/m^{2 *}d^{*}bar liegt, besonders bevorzugt bei < 1 cm³/m²*d*bar liegt.

## Claims

1. Method of producing a homecompostable biomaterial product based on sunflower seed hulls or sunflower seed husks comprising:
- providing or preparing a compounded material, wherein said material is obtained by compounding a sunflower seed hull material or a sunflower seed husk material SPC with a biodegradable plastic, namely polybutylene succinate (PBS) or polybutylene succinate adipate (PBSA), wherein the sunflower seed hull material or the sunflower seed husk material compounded with PBS is referred to as SPC PBS, and the sunflower seed hull material or the sunflower seed husk material compounded with PBSA is referred to as SPC PBSA.

2. Method of claim 1, wherein the method comprises the additional step of:
- using the compounded material for the manufacture of an injection molded product from the list of injection molded products comprising:
biodegradable container, packaging, film, in particular of coffee capsules, tea capsule, urn, cup, plant pot, flower pot, tree spiral, mechanical plant and browsing protection.

3. Use of a sunflower seed hull biocomposite, namely SPC PBS or SPC PBSA, for the manufacture of biodegradable, homecompostable packaging, coffee capsules, tea capsules, containers, plant pots, urns, browsing protection, cups, flower pots, films, wherein the biocomposite consists of a biodegradable plastic, namely polybutylene succinate (PBS) or polybutylene succinate adipate (PBSA), which is compounded with sunflower seed hull material or sunflower seed husk material, respectively.

4. Method according to claim 2, **characterized in that** the compounded material is processed in an injection molding process to produce the container, the coffee capsule, the tea capsule, the packaging, the plant pot, the flower pot, the film, the cup.

5. Container, package, film, coffee capsule, tea capsule, plant pot, flower pot, cup, urn, tree spiral, mechanical plant and browsing protection produced by a process according to any one of the preceding claims 1, 2 and 4, wherein the produced product, namely the container, the package, the film, the coffee capsule, the tea capsule, the plant pot, the flower pot, the cup, the urn, the tree spiral, the mechanical plant and browsing protection, is biodegradable and homecompostable.

6. Homecompostable injection molded product produced by a process according to claim 1 or 2 and produced from a compounded material, wherein the material is made by compounding sunflower seed hull material or sunflower seed husk material with a biodegradable plastic, namely polybutylene succinate (PBS) or polybutylene succinate adipate (PBSA), and a proportion of the sunflower seed hull material or sunflower seed husk material in the compound is at least 10%, preferably 30% or more, for example also above 50%.

7. Container, packaging, film, in particular coffee capsule, tea capsule, plant pot, flower pot, cup, urn as according to claim 5, **characterized in that** the product to be manufactured, that is container, packaging, film etc. is constructed with a multilayer composite having a first and a second layer and an intermediate layer arranged between the two layers, wherein the first and the second layer consisting of SPC PBS and/or SPC PBSA and the intermediate layer, e.g. of PVOH of G polymer, acting as a barrier layer as an oxygen barrier layer whose oxygen barrier effect is < 50 cm³/m²*d*bar, preferably below 10 cm³/m^{2*}d^{*}bar, particularly preferably < 1 cm³/m²*d*bar.

## Revendications

1. Procédé de fabrication d'un produit en biomatériau compostable à domicile à base de coques ou d'écorces de graines de tournesol, comprenant :
- la fourniture ou la fabrication d'un matériau compoundé, dans lequel le matériau est obtenu par compoundage d'un matériau de coques ou d'écorces de graines de tournesol SPC avec une matière plastique biodégradable, à savoir du succinate de polybutylène (PBS) ou de l'adipate de succinate de polybutylène (PBSA), dans lequel le matériau de coques ou d'écorces de graines de tournesol compoundé avec du PBS est désigné par SPC PBS et le matériau de coques ou d'écorces de graines de tournesol compoundé avec du PBSA est désigné par SPC PBSA.

2. Procédé selon la revendication 1, dans lequel le procédé comporte l'étape supplémentaire :
- l'utilisation du matériau compoundé pour la fabrication d'un produit moulé par injection à partir de la liste de produits moulés par injection présentant : un récipient, un emballage, un film biodégradable, en particulier des capsules de café, des capsules de thé, des urnes, des gobelets, des cache-pots, des pots de fleurs, des spirales d'arbre, des protections de plantes et protections contre l'abroutissement mécaniques.

3. Utilisation d'un biocomposite de coques de graines de tournesol, à savoir SPC PBS ou SPC PBSA, pour la fabrication d'emballages, de capsules de café, de capsules de thé, de récipients, de cache-pots, d'urnes, de protection contre l'abroutissement, de gobelets, de pots de fleurs, de films biodégradables, compostables à domicile, dans lequel le biocomposite se compose d'une matière plastique biodégradable, à savoir du succinate de polybutylène (PBS) ou de l'adipate de succinate de polybutylène (PBSA) qui est compoundé avec du matériau de coques ou d'écorces de graines de tournesol.

4. Procédé selon la revendication 2, **caractérisé en ce que** le matériau compoundé est traité dans un procédé de moulage par injection pour la fabrication du récipient, de la capsule de café, de la capsule de thé, de l'emballage, du cache-pot, du pot de fleurs, du film, du gobelet.

5. Récipient, emballage, film, capsule de café, capsule de thé, cache-pot, pot de fleurs, gobelet, urne, spirale d'arbre, protection des plantes et protection contre l'abroutissement mécaniques, fabriqué par un procédé selon l'une quelconque des revendications 1, 2 et 4, dans lequel le produit fabriqué, à savoir le récipient, l'emballage, le film, la capsule de café, la capsule de thé, le cache-pot, le pot de fleurs, le gobelet, l'urne, la spirale d'arbre, la protection des plantes et la protection contre l'abroutissement mécanique, est biodégradable et compostable à domicile.

6. Produit moulé par injection compostable à domicile, fabriqué par un procédé selon la revendication 1 ou 2 et fabriqué à partir d'un matériau compoundé, dans lequel le matériau est obtenu par compoundage de matériau de coques ou d'écorces de graines de tournesol avec une matière plastique biodégradable, à savoir du succinate de polybutylène (PBS) ou de l'adipate de succinate de polybutylène (PBSA) et une part du matériau de coques ou d'écorces de graines de tournesol dans le compound s'élève à au moins 10 %, de préférence à 30 % ou plus, par exemple est également supérieure à 50 %.

7. Récipient, emballage, film, en particulier capsule de café, capsule de thé, cache-pot, pot de fleurs, gobelet, urne, selon la revendication 5, **caractérisé en ce que** le produit à fabriquer, donc récipient, emballage, film, etc. est constitué d'un composite à couches multiples avec une première et seconde couche et une couche intermédiaire agencée entre les deux couches, dans lequel la première et la seconde couche se composent de SPC PBS et/ou SPC PBSA et la couche intermédiaire par exemple de PVOH du polymère G, agit comme couche barrière comme couche barrière à l'oxygène, dont l'action de barrière à l'oxygène est < 50 cm³/m²*d*bar, de préférence inférieure à 10 cm³/m² *d*bar, de manière particulièrement préférée < 1 cm³/m² *d*bar.
